Europäisches Patentamt

(19) European Patent Office

Office européen des brevets

(11) Publication number: **0 388 162**
**A2**

(12) **EUROPEAN PATENT APPLICATION**

(21) Application number: **90302691.2**

(22) Date of filing: **14.03.90**

(51) Int. Cl.⁵: **G06F 15/30**

(30) Priority: **14.03.89 US 322985**
**28.03.89 US 329866**

(43) Date of publication of application:
**19.09.90 Bulletin 90/38**

(84) Designated Contracting States:
**DE ES FR GB NL**

(71) Applicant: **CHICAGO BOARD OF TRADE**
**141 West Jackson Blvd.**
**Chicago, Illinois 60604(US)**

(72) Inventor: **Belden, Glen W.**
**4164 Terramere Avenue**
**Arlington Heights, Illinois 60004(US)**
Inventor: **Brogan, John J.**
**505 North Willow Wood Dr.**
**Palatine, Illinois 60067(US)**
Inventor: **O'Halleran, Thomas C.**
**690 Audsley**
**Winnetka, Illinois 60093(US)**
Inventor: **Gutterman, Burton J.**

**780 Bluff**
**Glencoe, Illinois 60022(US)**
Inventor: **Kinsella, John R.**
**508 S. Owen**
**Mt. Prospect, Illinois 60056(US)**
Inventor: **Boyle, Michael B**
**2409 Rio Grand Circle**
**Naperville, Illinois 60565(US)**
Inventor: **Chow, Alvin**
**901 Cherokee Road**
**Wilmette, Illinois 60091(US)**
Inventor: **Phelps, Bruce**
**116 Lewis Lane**
**Wheaton, Illinois 60187(US)**
Inventor: **White, James**
**5344 S. Nottingham**
**Chicago, Illinois 60638(US)**

(74) Representative: **Muir, Ian R. et al**
**HASELTINE LAKE & CO. Hazlitt House 28**
**Southampton Buildings Chancery Lane**
**London WC2A 1AT(GB)**

(54) **Apparatus for market trading.**

(57) A method and apparatus for market trading is disclosed, the apparatus generally comprising a host processor and a plurality of user terminals in selective communication with the host. Each user terminal includes a selectively partitionable display by which market information is conveyed to a participant. Among other features, the method involves the use of icons for representing traders, each icon including information relevant to the commodity being traded. The method and apparatus are applicable to markets for trading commodities such as securities, securities options, futures contracts, futures options, and the like.

Fig. 1a

© 1989 Chicago Board of Trade

Fig. 1b

Fig. 1c

trading arena

price displays

supplementary information

MOUSE ~203

201

202

**FUNCTION KEYS**

F1 F2 F3 F4 F5 F6 F7

**PRICE DISPLAY KEYS**

P1 P2 P3 P4 P5

P6 P7 P8 P-ALL

ENTER  CANCEL  BOTH

SELL  BUY

OPTION

OFFER  BID

OFF/ON

Normal
Alpha
Keyboard

7 8 9
4 5 6
1 2 3
0 @

+

SHIFT

# APPARATUS FOR MARKET TRADING

A portion of the disclosure of this patent document contains material to which a claim for copyright is made. The copyright owner has no objection to the facsimile reproduction by anyone of the patent document or the patent disclosure, as it appears in the official file or records, but reserves all other copyright rights whatsoever.

The present invention relates to computer-based apparatus allowing interaction between a group of users allowing them to communicate as if they were participants in a physical market for trading items such as stocks, bonds, stock options, futures options, and futures contracts on commodities including agricultural products, financial instruments, stock market indices, and the like.

A futures contract is an agreement providing for the future delivery of a fixed quantity of a commodity under conditions specified by a federally designated exchange. In general, that contract is a firm legal agreement between a buyer and seller to make or take delivery of the underlying commodity and is cleared by a separate clearinghouse.

The futures exchanges house centralized auction markets (called designated contract markets) where standardized contracts, based on quantity and quality of commodity, are bought and sold, for future delivery, by open outcry. It is important to note that the exchanges themselves do not trade commodity contracts, nor do they set prices at which contracts are traded. They merely furnish a place where market participants and their brokerage representatives can meet to buy and sell commodity futures contracts.

Floor traders are generally classified in two ways (1) as speculators, or "locals" who buy and sell for their own accounts, or (2) as floor brokers, who fill orders for commission houses, producers and processors seeking to lock in a price for their products. A "local" can take long-term positions (i.e., weeks or months) or "scalp" over very short periods (liquidating positions within seconds or minutes of entering the transactions). He may trade in one or more pits. He benefits from the speed with which he can take or liquidate positions, but this is in itself no assurance of a profit. Some floor traders specialize in spreads by taking opposite positions between future or options when the price difference appears abnormal. Floor traders have the advantage of lower transaction costs available to all members of exchanges.

Some floor traders execute orders for others but seldom or never trade for themselves. These are brokers who may who may specialize in orders from customers such as commercial processors, exporters, financial institution commodity trading funds and the like. They may receive only a small percentage of the commissions paid by the customer to his commission house, but the commission revenues may be substantial depending on the volume of business. The orders held by a floor broker at any given time are referred to as his "deck." He is allowed to trade for his own account if he chooses, but can not use the public orders to benefit his own trading.

Trading generally takes place in a pit or around the outside of a ring. All orders received by member firms are transmitted to the exchange floor for execution and are filled according to bids and offers in the respective pits by open outcry to all members present at the time. Only one commodity is traded in a pit or around a ring unless the volume is too small to justify so much space. Customarily, those trading the same delivery month of a commodity gather in the same area of the ring or on the same step of the pit so that a broker with an order can locate the particular market as quickly as possible.

Whenever volume is high and price changes of a commodity are rapid, it is not uncommon for different prices to be bid and offered for the same delivery month in different parts of the trading area at the same time. These conditions might result in trades at prices that are never officially quoted or might cause an order to be marked "unable," even though the price on the order was well within the range of trading in that commodity.

Transactions on the trading floor must be reported to the membership and the general public. This is accomplished through a variety of communications systems by the various commodity exchanges. Transaction information is entered by exchange-employed market reporters in each trading pit and is accessible through computer terminals and electronic wallboards on each trading floor.

At the end of each day the clearing house, which may be a subsidiary of the exchange or an independent entity, assumes one side of all open contracts: the clearing house becomes the buyer to each seller of a futures contract, and a seller to each buyer. The clearing house guarantees its members the performance of both sides of all open contracts.

Other aspects of the commodity markets are treated in the literature, which includes Kaufman, "Handbook of Futures Markets," John Wiley & Sons, New York (1984); Rothstein, "The Handbook of Financial Futures," McGraw Hill Book Company, New York (1984); Gould, "The Dow Jones-Irwin Guide to Commodities Trading," Dow Jones-Irwin, Homewood (1981); Goss & Yamey, "The Economics of Futures Trading," John Wiley & Sons (1976); Johnson & Hazen, "Commodities Regulation," Little, Brown and Company, Boston (1989); R. Teweles et al., "The Commodity Futures Game," McGraw-Hill, New York (1974); T. Hieronymus, "Economics of Futures Trading," Commodity Research Bureau, Inc., New York (1971); "Commodity Trading Manual," Chicago Board of Trade, Chicago (1985); and J. Schwager, "A Complete Guide to the Futures Markets," John Wiley & Sons, New York (1984).

The open outcry method of auction trading is widely believed to be the best method of buying and selling goods because of the fast access to the market it provides to all prospective traders. At present the open outcry auction in the pit produces a large quantity of information which must be recorded accurately and quickly by hand. As markets become more complex and international in character, those requirements and the need for the physical presence of human traders in the same place may excessively restrict development of the market.

The information which is available to traders in present-day trading pits includes: (1) the identities of the other traders in the pit; (2) the market activities of the other traders in the pit, including bids, offers, and trades made or not; (3) the personal appearance of other traders in the pit; and (4) selected news from outside the pit. It should be understood that some of this information is provided to present traders by subtle inferential communication means, such as body language, as well as by more objective means like news tickers and electronic bulletin boards.

Accordingly, an object of the present invention is to replicate the action which occurs in real commodity trading pits with an electronic system which would relieve the restrictions inherent in the such pits while retaining their advantages. Other automated trading systems and the like are disclosed in U.S. Patents 4,789,928 to Fujisaki; 4,677,552 to Sibley, Jr.; and 4,674,044 to Kalmus, et al.

By using the system of the present invention, traders and their customers will have the benefit of the open outcry auction market's time-proven efficiency in discovering prices; the liquidity that locals bring to the trading pit; the competition between many buyers and many sellers that drives prices to their most economically appropriate level; the transparency of the market, which allows traders to know who is in the market and at what price and quantity; and the ability to provide a superior level of market surveillance.

As described above, the trading system of the present invention is applicable to all markets, including those for securities trading. Securities markets are usually based on actions by specialists, each of whom is the market maker for one or more specific securities. In the New York Stock Exchange, for example, the ultimate determination of price for any given transaction frequently is determined by a specialist who deals in a particular stock and who maintains a running list or "book" of offers to sell and orders to purchase that stock. The specialist may complete a transaction in the stock whenever one or more purchase and sell orders can be matched with respect to price; on occasion, the same specialist purchases the particular stock in which he specializes or sells the same stock in order to maintain a market for the stock and prevent violent fluctuations in its price. Similar functions, particularly with respect to the matching of orders to purchase and to sell, must be carried out in all auction markets for the marketing of fungible goods, including such commodities as wheat, corn, and the like as well as stocks and bonds.

A computation system for establishing prices in auction trading for the securities market is described in U.S. Patent 3,581,072 to Nymeyer. That computation system comprises a main data store for recording encoded data items representative of orders to buy and to sell the goods, such orders including orders at specific prices and other orders "at the market." The system includes a buy order sequencing device for arranging and recording purchase offers first in descending order by price and secondly by time of entry so that at each price level the oldest orders are uppermost. A sell order sequencing device is provided for arranging and recording all offers to sell first in ascending order by price and secondly in descending order by time so that once again the oldest orders are the highest at each price level. A closing price store is provided to record the last actual selling price for the goods. The closing price store and the main data store are coupled, by suitable control means, to the sequencing devices in order to transfer the recorded data items from the data store to the sequencing devices with "at market" prices being transferred at the aforementioned last selling price. The two sequencing devices are coupled to a comparator that compares the sell orders and the buy orders, when they have been arranged in sequence, to determine the lowest buy order price that is equal to or greater than a recorded sell order and thus establish a new selling price for the goods.

More than such a system for merely matching buy and sell orders, the present invention provides a system that allows traders to create a market, whether of the open-outcry type or of the order-matching type. Its trade reaction time closely approximates that associated with a live auction market. Information necessary for traders is presented on a display. The re-creation of the competitive pit provides an incentive for locals to trade, thereby maintaining the liquidity that is critical to auction market trading. The system also provides market transparency, i.e., participants can see who is in the market and who is executing trades with whom -- an important component of a competitive market. Finally, the present invention's ability to allow participants to view the market, just as if they were physically present, encourages a competitive market and enhances the ability to detect trading abuses that may occur.

With the system of the present invention, traders can quickly see who is in the pit, whether they are buying or selling, in what quantity, the bids and offers, price levels and a wide variety of market activity.

The electronic market, in accordance with the present invention, provides most of the information that is now available in the real pits and on the exchange floors and additional information and capabilities not currently available. For example, only the bids and offers that are at the market are presented, just as it is done in the physical pit. Also, the system tabulates all of the bids and offers by contract month and provides a short time frame report of who traded how much with whom. In addition, the system keeps a running tabulation of the trader's own position. The invention further facilitates the auction market by providing different screens for each of the different contract months and trading pits, but still allows traders to move freely between contract months and trading pits. It will be appreciated that those advantages are also provided to all market forms which can be practiced with the present invention.

The present invention also reduces the back office costs to trading firms by reducing the volume of paperwork and consequent errors. For example, the system of the present invention automatically sends matched trades through for clearing through the clearing organization, further reducing costs by minimizing mismatched trades or out-trades.

## SUMMARY

In accordance with the present invention, an apparatus for market trading comprises a host processor which selectively communicates with a plurality of user terminals, each user terminal including a selectively partitionable display by which information is conveyed to a user and means for entering information by which the user participates in the market.

The system advantageously employs a high-resolution color display and a keyboard and hand-held mouse for information entry in each user terminal. The display identifies active traders by displaying a separate symbol or icon for each, e.g., either a blue square for those bidding to buy contracts or a red oval for those offering to sell. In one embodiment, the quantity of each trader's bid or offer is listed within each icon, as is each trader's badge acronym, so everyone knows who's buying and selling how much. In an alternative embodiment, the securities, securities options or other commodities that are traded by each specialist may be listed within each icon with the specialist's acronym.

Also displayed on the screen may be a box, which is preferably a contrasting color such as green, listing the trader who is currently making the market in a futures contract by being the first at the best bid or offer price. When that trader's price is hit, his order gets top priority. Trading is done by using the mouse to move a cursor onto the icon of a trader and pushing a button, i.e., "clicking" on the icon.

In one embodiment, users also can type in the initials of several traders and push a single button to fill a larger order by simultaneous transactions with the several traders. Similarly, the present systems can automatically match orders, e.g., a large order with a plurality of smaller quantity traders, or orders for stocks or other securities as in the stock exchanges. The orders could be filled, for example, based upon price and time of receipt.

The system permits scalping and spread trading by providing selective display of information relating to different commodity contracts.

## BRIEF DESCRIPTION OF THE DRAWINGS

The objects and advantages of the present invention will be better understood after a reading of the following detailed description in conjunction with the drawings in which:

Figure 1a shows a block diagram of a portion of an apparatus in accordance with the present invention;

Figures 1b and 1c show embodiments of other portions of an apparatus in accordance with the present invention;

Figures 2a, 2b, and 2c show display partitions in accordance with present invention;

Figure 3 illustrates the presentation of supplementary information on a display;

Figure 4 illustrates a display partitioned for an auction market during auction market trading;

Figures 5a, 5b, and 5c illustrate successive displays of trader identifying information;

Figure 6 shows a display partitioned for "spread" trading;

Figure 7 shows a display partitioned for option trading; and

Figure 8 shows a functional block diagram of the user terminal instructions.

## DETAILED DESCRIPTION

In accordance with the present invention, an electronic method and apparatus are provided which facilitate the rapid exchange of large amounts of inferential and objective information without requiring a physical congregation of traders.

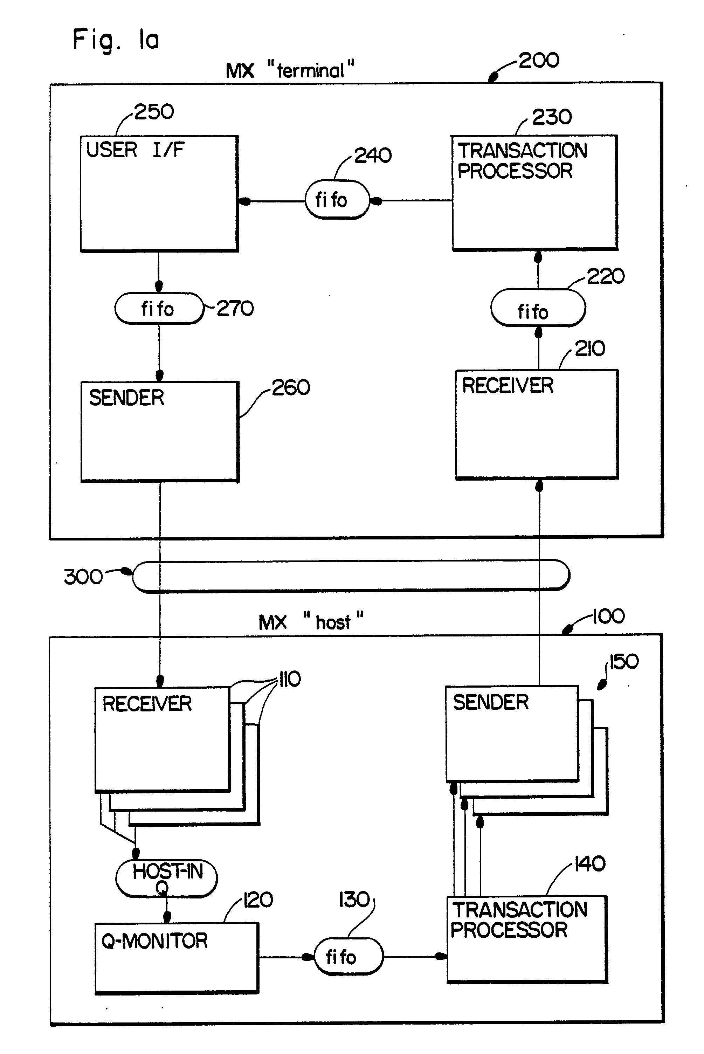

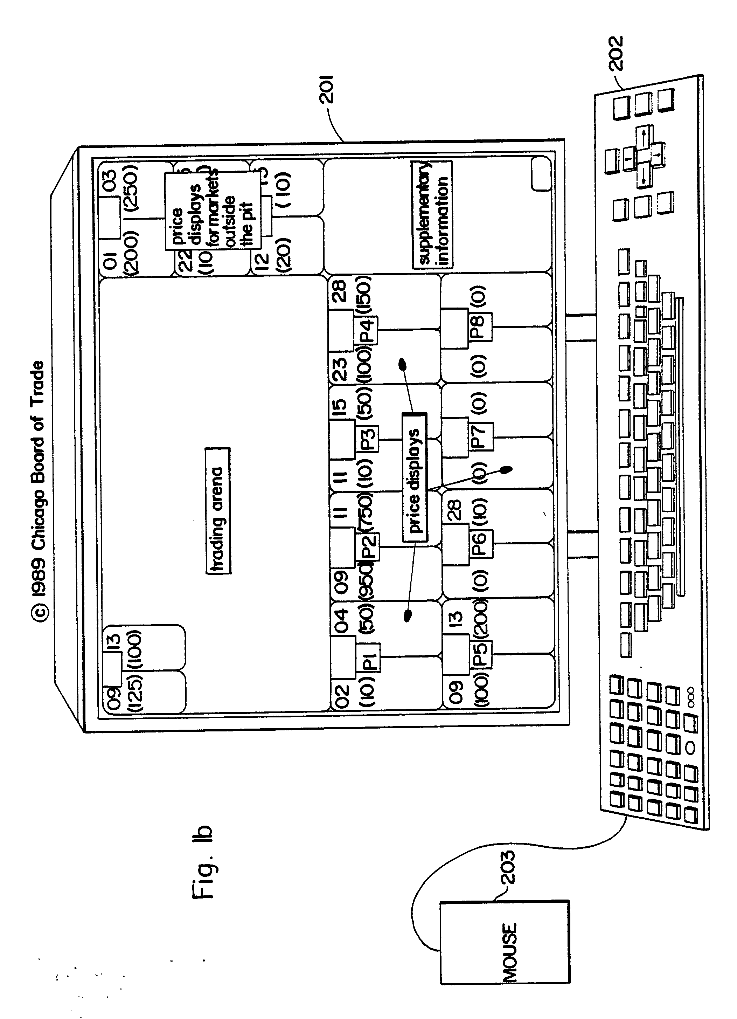

Referring now to the Figures in which like reference numerals indicate like parts throughout, Figure 1a shows a block diagram of an apparatus in accordance with the present invention comprising a host processor 100 that communicates with a plurality of user terminals 200 (only one of which is shown) via a communication link 300. As described in more detail below, the host processor 100 may advantageously be one of the "NonStop" systems manufactured by Tandem Computers, Inc., and each user terminal 200 may be a microExplorerTm processor, made by Texas Instruments Inc. that includes a Model Macintosh II manufactured by Apple Computer, Inc., having a Radius display. It will, however, be appreciated that other suitable devices are commercially available. One embodiment of a user terminal 200 is illustrated in Figure 1b which shows a high-resolution display 201, a keyboard 202 and a mouse 203.

The host processor 100 carries out a plurality of instruction modules, which can be written in any suitable computer language, such as COBOL or TAL. One of a plurality of host receiver modules 110 receives communications from a selected one of the plurality of user terminals 200 that are logged into the system. Each host receiver module 110 is thus a port into the host processor 100, which is activated initially by an attempt at connection by a user terminal. It will be appreciated that the greater the number of host receiver modules 110 that can be implemented by the host processor, the greater the number of traders who can participate in the market.

In operation, a host receiver module 110 receives transactions and other information input to the system at a user terminal and electronically attaches or associates that information with a time of receipt indication. Such time stamping is important for audit and integrity functions of the system, as well as for carrying out order-matching features of other types of trading system. The received transaction and time-stamp are then stored temporarily in a host-in queue in the receiver module, and the host receiver module 110 causes the host to send an acknowledgment of receipt to the transmitting user terminal. In some situations, the host receiver module 110 would cause the host processor 100 to send a not-acknowledged message to the sending user terminal so that the information could be retransmitted. Such situations would typically occur when the host-in queue is temporarily full or when an error in the format of the information, such as might arise from a noisy communication link, occurs.

The host-in queue in the host receiver module 110 is advantageously realized by any suitable randomly accessible buffer memory rather than a first-in, first-out (FIFO) buffer. As described further below, by using a random access buffer, the host processor can sort the information resident in the buffer and selectively prioritize processing of that information.

A receiver module 110 receives the information from the user terminals 200 and places it in the host-in queue in a predetermined time sequence. The receiver module 110 thus can advantageously arrange for processing of information from a first user terminal before processing of information from a second terminal despite the host receiver's earlier receipt of the second terminal's information. For example, trades by a user in Japan could be processed by a Chicago-located host processor before trades from a Chicago user are processed. In this way, communications link delays can be compensated by the system so that the system access time will be equal for all users. In addition, the receiver module 110 can implement the order-matching features of the present invention for organizing information in price and time sequences as in other types of trading system.

The Q-monitor module 120 examines the information and time stamps in the host-in queue, and moves that information into a delayed-host-in queue memory 130 at the time determined by the receiver module 110 which placed the information in the host-in queue. For audit and record-keeping purposes, the Q-monitor module 120 adds another time-stamp to each packet of information, and it moves and outputs the packets to the delayed-host-in queue, which can be a FIFO buffer, for transfer to a transaction processor 140.

The transaction processor 140 of the host processor 100 is initialized when the host processor is initialized. In a prototype version, initialization would consist, in pertinent part, of the loading into on-line memory from bulk storage, e.g., a hard disk memory, the host database of authorized users, transactions, screen displays, etc. After initializing, the transaction processor 140 accepts information from FIFO 130. The processor 140 preferably time-stamps each information packet from the FIFO 130, and verifies that the information is valid, e.g., represents a type of transaction performed by the system. If valid, the transaction processor carries out the transaction by updating host primary and secondary databases that reside, typically, on a hard disk memory. The primary and secondary databases are part of the redundancy of the host processor 100 and thus contribute to the system's failure resistance.

After updating the host primary and secondary databases, the transaction processor 140 inserts into a host-out queue the appropriate information for transmission to the user terminals. For audit purposes it is advantageous to add another time-stamp to each packet of information as it is inserted in the host-out queue, and to write the time-stamped information to an audit log. In a prototype version, at predetermined intervals, the host database would be dumped to bulk storage and, preferably, a backup bulk storage, and primary and secondary system recovery logs would be reset. In the prototype version, the primary and secondary system recovery logs serve the purposes of the host primary and secondary databases.

The information in the host-out queue is communicated to the user terminals through a plurality of host sender modules 150, there being one for each user terminal logged into the system. The host sender module also advantageously time stamps the information as it sends it to the user terminals, and receives an acknowledgement of receipt message from the user terminal. In the event of a transmission error, the host sender module retransmits the information to the user terminals. It will be appreciated that the host sender module also transmits a message indicating that the host processor is still "alive" in the event that the host-out queue is empty due to a period of market inactivity.

As described in more detail below, each user terminal 200 preferably includes a large proportion of the instructions necessary for carrying out the present trading system. Those instructions are advantageously implemented in LISP, PASCAL or C, although LISP is preferable because of the flexibility it provides. Referring now to the user terminal 200 shown in the block diagram of Figure 1a which is representative of the plurality of user terminals which may be logged into the system simultaneously, a terminal receiver module 210 is activated by the attempted transmission from a host sender module 150 and receives the information transmitted. After time-stamping the received information, the terminal receiver module 210 places the information in a terminal-in queue 220, such as a FIFO buffer, and transmits an acknowledgement message to the host processor 100. If the terminal-in queue 220 is full or if an error in the information is detected by the terminal receiver module, the module 220 transmits a not-acknowledged message to the host processor. The terminal receiver module 210 also handles the "alive" message from the host processor 100 in the event of little market activity.

Information in the terminal-in queue 220 is removed by a terminal transaction processor 230 which time-stamps the information and updates the terminal's database and displays in accordance with the information through a FIFO buffer 240. As described in more detail below, those updates reflect market activity and certain other information requested by the user.

The information in the FIFO 240 presented to a terminal user and information input to the terminal by the user are transmitted through a terminal user interface module 250. The module 250 has been designed using the ACTION!Tm software development tool available from Expertelligence, Inc. The ACTION!Tm tool greatly facilitates the writing of window-type code for controlling the display of the microExplorerTm computer. The module 250 carries out a suitable log-in procedure to the host processor 100, thereby causing the host processor to initialize the user terminal database with suitable information from the host database.

After the user terminal 200 is initialized via the terminal user interface module 250, a terminal sender module 260 establishes communication with the host processor 100. The sender module 260 removes data from a terminal-output queue 270, such as a FIFO buffer, attaches a terminal address and time-stamp and communicates the information to the host. When the terminal-output queue 270 is empty for a predetermined time period, the sender module 260 transmits a suitable terminal "alive" message to the host. The sender module 260 is also responsive to the acknowledge, not-acknowledge, error messages received at the terminal from the host processor.

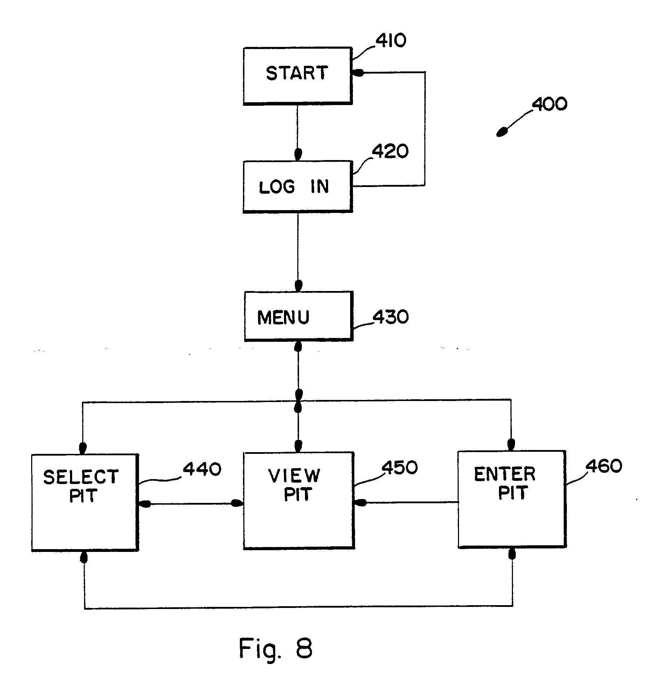

In a preferred embodiment, a large proportion of the instructions for carrying out the trading system of the present invention are written in LISP or C and are resident in each user terminal 200. In this way, the system's programming is easy to accomplish and the capacity of the communication link 300 is minimized. Referring to Figure 8, which is a block diagram of the organization of the instructions included in each user terminal 200, the instructions 400 resident in a user terminal advantageously comprise a plurality 410-460 of "objects", as they are conventionally referred to in LISP programming, or "applications", as they are referred to when using the ACTION!Tm software development tool kit. It will be understood that "objects" and "applications" correspond generally to "subroutines" in other programming languages. They include data and logic structures, including suitable pointers and other indexes, that enable execution of user requests and direct the logical flow of program execution among several "objects." Although illustrated in terms of a futures market, it will be understood that the organization of the instructions for carrying out a stock, bond or other securities market would be substantially similar.

The START SCREEN application 410 is a LISP object which is executed automatically at turn on of a user terminal 200. The START SCREEN application 410 verifies proper initialization of the terminal 200 and queries the user whether logging into the system is desired.

The LOGIN application 420 is executed in response to an appropriate user input, whether via mouse, keyboard or other entry means. The LOGIN application 420 queries the user for his user name and for his password which, when input, are communicated to the host processor 100 for review. If the user name and password are authorized for access, the LOGIN application 420 responds to receipt of an authorization signal from the host processor by transferring execution to the MENU application 430. If authorization is denied, e.g., because the authorized user had previously requested his terminal to be "locked out" during his vacation, execution is returned to the START SCREEN application 410.

Once access is granted to the user terminal 200, a MENU application 430 is executed which queries the user as to which of the other applications, i.e., VIEW PIT 450 and ENTER PIT 460, is desired. As described further below, the interrelation of the applications 430-460 is such that logical execution of the user terminal instructions can move rapidly and easily among the applications.

The SELECT PIT application 440 responds to user inputs indicating which of the trading pits, e.g., financial securities, farm commodities, etc., is desired for view or entry. Similarly, the SELECT PIT application 440 could indicate which security or securities exchange is desired. Depending on the pit selected and the action desired, logical execution of the user terminal program would be directed to the VIEW PIT application 450 or the ENTER PIT application 460. In addition, it will be understood that in response to the user input, the latest relevant information is communicated to the terminal 200 from the host processor 100.

The VIEW PIT application 450 implements the aspects of the present trading system relating to identifying to the user who is in the trading pit selected for viewing. Thus, as described in more detail elsewhere, the application 450 includes LISP objects for generating trader icons with proper identifications, for generating pop-up windows that provide additional identifying information about a selected trader icon, and for quitting the VIEW PIT application 450 and returning to one of the other applications.

The ENTER PIT application 460 is the LISP object which implements the active trading features of the present invention. The ENTER PIT application 460 advantageously comprises (1) a Pit Pane object for creating the trading arena portion of the display, (2) a Pit Markets object for creating the display portion relating to other markets in the pit displayed in the trading arena, (3) an Other Pits object for creating the display portion relating to the user-selection of other pits and markets, and (4) a Supplementary Information object for creating the display portion relating to the user-selection of news services and telephone, as well as the personal trading history, recent trades list, trader entry/exit list, and for dealing with user entry of information.

The Pit Pane object itself comprises (i) a price display object for generating the blue and red price displays and their included information for the current market, (ii) a plurality of trader objects for generating the randomly positioned trader icons in the trading arena, and (iii) a priority box object for generating and controlling the green priority box display. In addition, the price display object also includes two trader objects for generating the user's own trader icon in the trading arena, one for bidding and one for offering.

The Pit Markets object which generates the portion of the ENTER PIT application's display relating to other markets in the pit of the trading arena also advantageously executes a price display object and two trader objects, one for bidding and one for offering, for generating the user's own icon in the other markets displayed on the user's terminal screen. Similarly, the other Pits object executes a suitable price display object for the portion of the display relating to other pits. It will be noted that since, in the preferred embodiment, the other pits' price displays do not include trader icons, the Other Pits object need not execute a trader object.

Furthermore, the Supplementary Information object executes individual objects for carrying out the other aspects of the trading system, e.g., the telephone, the display of which traders have entered and left the pit since the user has entered, the display of the most recent trades made in the pit, the user's personal trading history, the display of messages from the host processor 100 and user terminal 200, and the user's input, e.g., trading activity, screen formatting, etc.

It will be understood that subdividing the tasks of the terminal instructions into LISP objects in the manner described significantly minimizes the complexity of and ef fort necessary for the implementation of the present system.

The bandwidth or other equivalent measure of capacity required of communication link 300 between each user terminal 200 and the host processor 100 depends on the volume of transactions to be carried out by the present auction trading system. It has been found that for after-hours trading at the Chicago Board of Trade, a normal telephone link's capacity of 9600 BAUD is sufficient because of certain efficiencies inherent in the Macintosh family of computers. Those efficiencies relate to the amount of data needed by one Macintosh computer to inform a second Macintosh of the contents of its output display, and are inherent to the Macintosh operating system.

In a preferred embodiment of the invention, communication between the user terminal 200 and the host processor 100 is carried out through a combination of two-way, interactive communication and one-way, "broadcast" communication. The "broadcast" feature is implemented by the host processor sending to all logged in user terminals the information necessary to update their displays in light of the trading system activity. Such bursts would preferably occur at predetermined intervals, e.g., one second. The remaining capacity of the communication link 300 is then devoted to interactive communication. As described above, it will be understood that suitable selection of hardware components can minimize the link capacity needed for the system. Of course, communication technologies which provide very high capacity links, e.g., fiber optic links, television vertical blanking interval links, etc., can also be used.

Recognizing that the broadcast of system updating information occurs only at predetermined intervals, the trading system preferably resolves timing conflicts by noting which of conflicting user actions arrived first at the host processor 100. For example, if a first user clicks on a second user's bid icon after the second user has changed his/her bid quantity but before the first user's display was updated by the host broadcast, the trading system preferably would indicate a completed trade for the second user's later quantity. Similarly, if the first user's clicking on the second user's bid icon arrives at the host processor before the second user's changing his/her quantity arrives, the trading system preferably indicates a completed trade at the second user's earlier quantity.

It will be understood that the phrase "arrives at the host" can include additional timing or delay factors that may be added to communications from selected user terminals. As described above, such additional factors may be used to equalize communication link propagation times for widely separated users, or to favor local users over remote users.

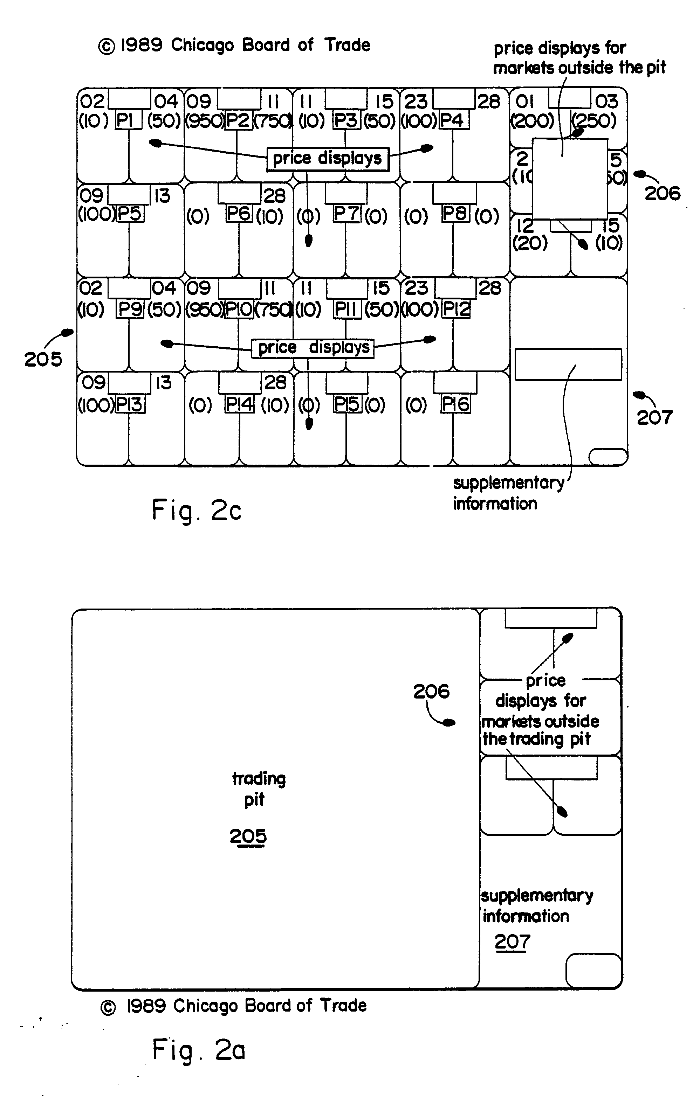

Referring to Figure 2a, there is shown a preferred organization for trading information presented on the display 201 of the user terminal 200. The trading screen is advantageously partitioned into three parts: a trading arena or trading pit area 205, an other pits area 206, and a supplementary information area 207. The other pits area 206 presents price displays for a plurality of user-selected markets in pits other than the pit displayed in the trading pit area 205. Three such other pit price displays are illustrated in Figure 2a, but it will be understood that some other number of price displays may be provided consistent with the size constraints of the display. It will be understood that the organization of trading information presented on the display 201 may be similarly adapted to the needs of stock, bond, stock option and other commodity trading as desired.

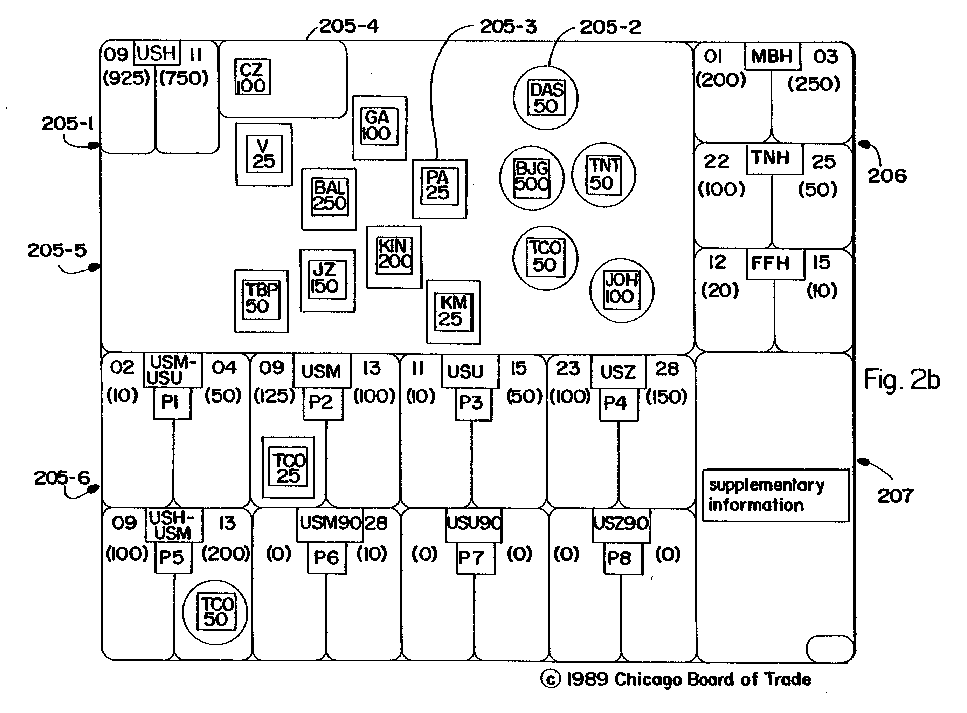

The elements of the display partitioning of a trading screen are illustrated in more detail in Figure 2b as follows:

## CURRENT CONTRACT PRICE DISPLAY:

This price display 205-1 shows the current bid price in a blue shaded area and the current offer price in a red shaded area and the total quantities (e.g., 925 bid, 750 offered) available. An acronym USH indicates that the prices given are for a March bond contract.

## MEMBER ICONS:

A small red oval 205-2 is called a member Offering icon. The icon includes a member's identifying acronym and the number of contracts he/she is offering. For example, member DAS is offering 50 contracts on March bonds. A small blue box 205-3 is called a member Bidding icon. This icon also contains a member's acronym and the quantity being bid for. For example, member GA is bidding for 100 contracts on March bonds. In the preferred embodiment, the display shows the bids and offers that are at the market or the icons would not appear on the trading screen.

The shapes and colors of the icons representing traders are selected to convey a substantial amount of pertinent information. In a preferred embodiment, a trader who is bidding is represented by an icon which is a blue square or other polygon. A trader who is offering is represented by an icon which is a red oval or other curved shape. On an identification display screen described in more detail below, a trader who is present in the pit, but is neither bidding nor offering, may be represented by a green third shape, and those who have left the pit may be indicated by a colorless icon having a shape in accordance with the absent traders' actions while in the pit.

Other important information conveyed by the icons are the identity of the traders in the pit and quantity that each trader is bidding or offering. This information is provided by including an alphanumeric string, such as a three-letter tag, for the trader's identity and a numeric string for the trader's quantity in each icon. As described in more detail below, additional information about each trader can be accessed through calling up to the display one or more screens for providing such information, and some traders may be permitted to have no quantity showing in their icons. It will be appreciated that the content of the trader icons is adapted to display the information needed by the market, e.g., the particular securities or options handled by traders in a stock exchange market.

### PRIORITY BOX:

The green box 205-4 in the upper left-hand area of the trading screen is the priority box. The offer or bid of the first member to make the market is placed in the priority box and automatically becomes the first bid or offer hit. As shown in Figure 2b, member CZ's bid for 100 contracts made the market at 09.

### TRADING ARENA:

The large area 205-5 of the trading pit screen is the trading arena. The icons of all the members who are at the bid or on the offer appear randomly positioned in the trading arena. Only one contract at a time can be placed in the trading arena.

### CURRENT PIT PRICE DISPLAY:

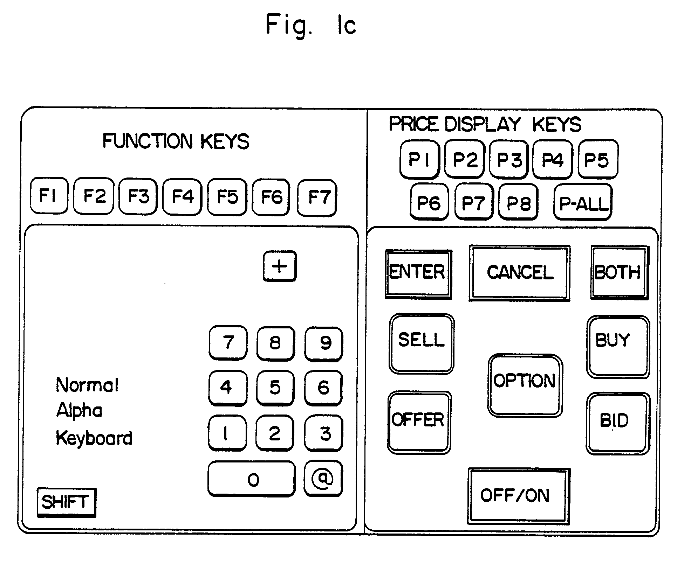

The price displays 205-6 at the bottom of the screen (eight are shown in Figure 2b) are for other contracts within the US Treasury bond pit. These displays show the current bid and offer prices and total quantities available in other contracts (including spread markets) within the Treasury bond pit. The current pit price displays may include indicators, e.g., P1, P2, P3, etc., which relate the contracts represented by the price displays to price display keys on the keyboard (see Figure 1c).

### OTHER PITS PRICE DISPLAYS:

The top right hand side of the trading screen contains the other pits area 206 showing three price displays for contracts outside the Treasury bond pit. Users can choose which pits and contracts they wish to view. The displays give bid and offer prices and total quantities available.

The supplementary information area 207 may include the following:

### PIT TRADE SUMMARY BOX:

This box or window displays the most recent trades that have occurred in the pit on the trading screen. For trades with brokers, the pit trade summary box preferably shows the clearing firm name of the broker's customer.

### PERSONAL TRADE SUMMARY BOX:

A personal trade summary box or window computes the user's own trading position. For example, if member KIN most recently sold 75 USZ to member JOH at a price of 11, the entry in the personal trade summary box shown on member KIN's trading screen would include "-75@ 11 JOH USZ."

### NEWS SERVICES BOX:

A news services box or window provides the text of items and reports carried by public or private information services such at Reuters and Dow Jones.

### TELEPHONE:

A telephone box or icon is an area provided for the telephone feature of the system, whereby a user can initiate a private conversation with another user by clicking on the telephone icon and, for example, then clicking on the other user's icon.

### MESSAGES:

A messages box provides the text of messages from the host processor and the local user terminal processor, e.g., for calling improper keystroke sequences to the user's attention.

It will be understood that other information may be provided to the user terminal display appropriate to the operation of a trading system, although it has been found that the substance and arrangement of the user terminal display in the manner described is successful not only in substantially replicating the "look and feel" of a live market, but also in providing additional features and advantages which are only available from a system in accordance with the present invention.

As described above, the trading pit area 205 of the trading screen may be suitably reconfigured according to the user's preference to show one or all of the markets in a given pit. As shown in Figure 2c, the trading pit area can be filled with price displays and not retain any trading arena area 205-5. It will be understood that other configurations of the trading screen are also possible according to the type of market to be displayed.

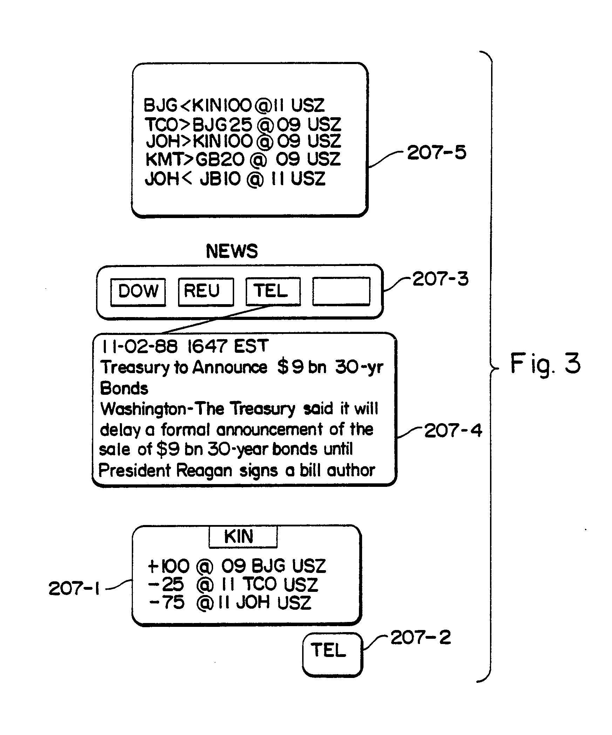

Referring now to Figure 3, there is illustrated part of the information presented in the supplementary information area 207 of the trading screen. As described above, the area 207 preferably includes a user-private personal trade summary box 207-1, a telephone box or icon 207-2 and a news service box 207-3. Selecting one of the news services indicated in the box 207-3 causes the system to form a window 207-4 in the supplementary information area for presentation of information from the selected news service. Also illustrated in Figure 3 is the pit trade summary box 207-5 which provides a list of the most recent trades occurring in the pit on display. As shown, five trades may be listed with each listing appearing for a predetermined time interval, e.g., thirty seconds. It will be understood that another number of trades, e.g., seven, may be listed in the pit trade summary box 207-5, and the period of display may also be varied according to the usual considerations and constraints such as space available on the display.

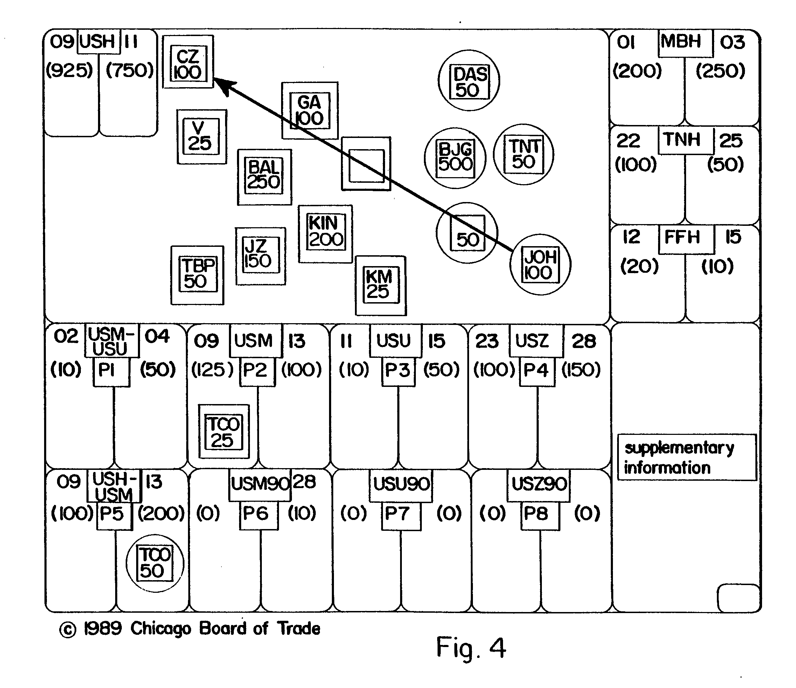

Figure 4 illustrates how a trade is indicated on the trading screen by showing an arrow between the relevant users. It will be understood that other means of indicating trades may also be employed, e.g., an arrow plus a starburst-like indication or blinking trader icons. Those indications contribute to a video-game-like look and feel that may be achieved by the present trading system and help to replicate the emotion of a physical market. It can be noted in Figure 4 that it is a preferable feature of the system that the icon of the trader making the market, i.e., CZ is making the bid market at 9 in Figure 4, is shown in the priority box and that trades are completed by the system only with that market maker until his/her quantity is met. After that time trades may be carried out between the icons randomly positioned in the trading arena. The participants of these trades are determined completely by the users. Resting orders comprising bids or offers which are not at the market may be entered into the system; such orders will not appear in the trading arena until all bids or offers at the market are met. In addition, as described elsewhere, trades may also be carried out by the system automatically, e.g., by arranging the buy and sell orders in price and time-of-receipt sequence for other types of trading system.

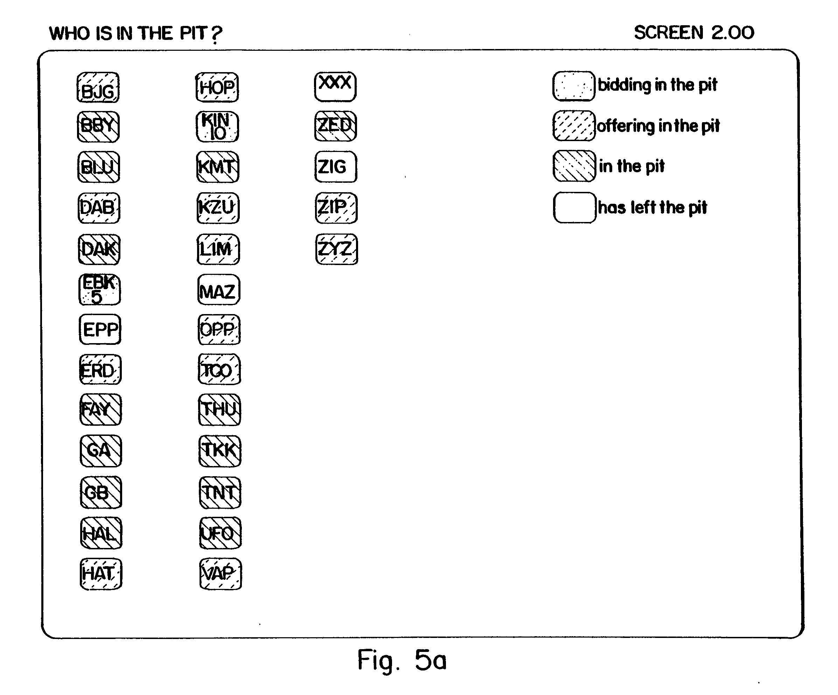

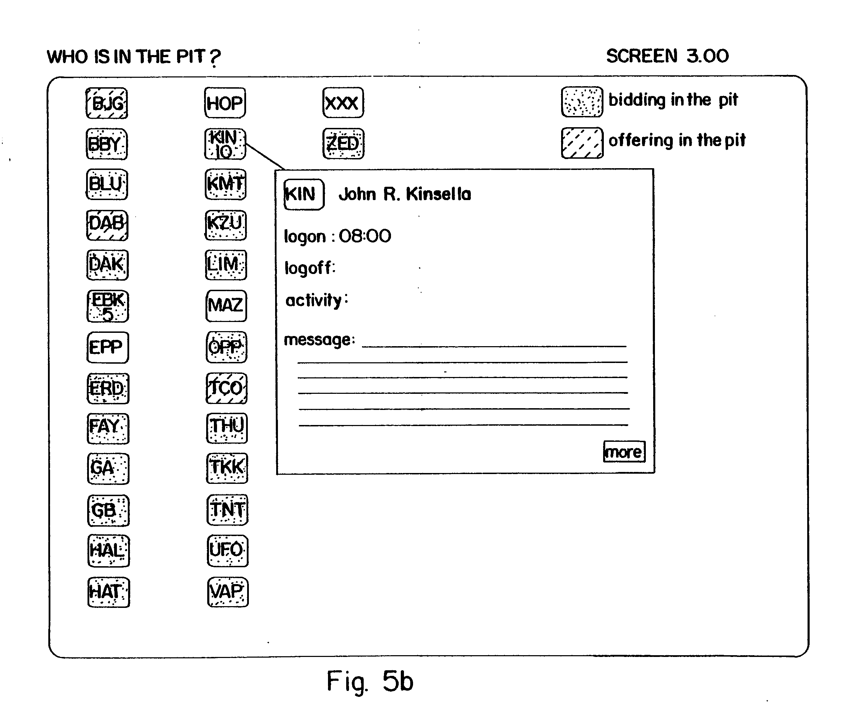

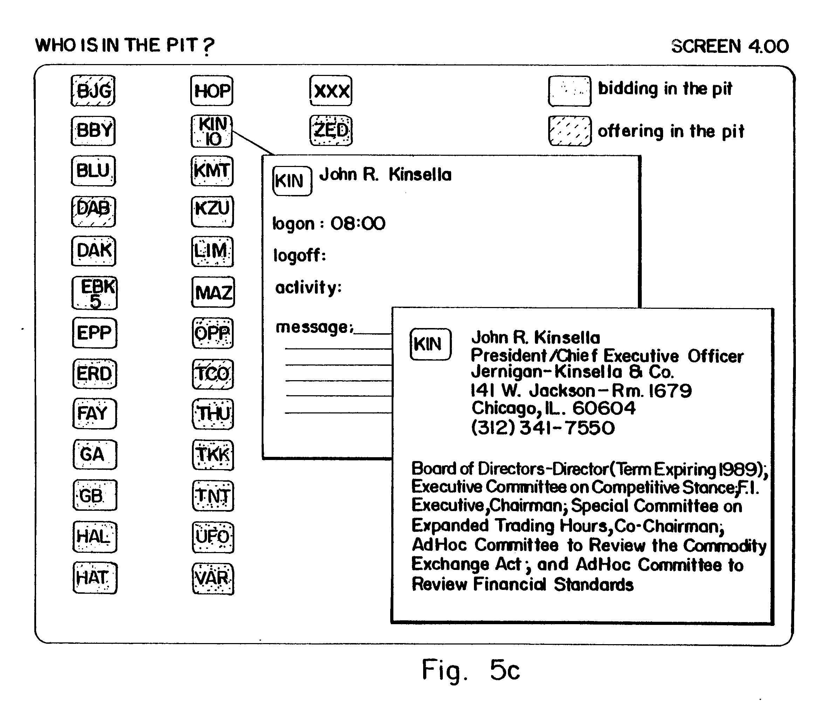

Referring to Figures 5a, 5b and 5c, there are illustrated screens of the user terminal display when the VIEW PIT application 450 is executed. A first identification screen shown in Figure 5a preferably indicates which traders are present in the pit, i.e., are viewing the particular pit on their trading screens, but are not making a bid or offer at the market. The trader icons shown in Figure 5a are advantageously color and/or shape coded to indicate the intentions or status of the traders. It will be appreciated that shape-coding may be employed to compensate for user or user terminal color-blindness. Figure 5b shows a pop-up window that can be accessed by clicking on member KIN's icon in the information screen of Figure 5a, Figure 5c shows a pop-up window that can be accessed from the prior window, e.g., by clicking on the KIN icon again. It will be understood that the present system permits users to call up the identification screens whenever desired after logging into the system.

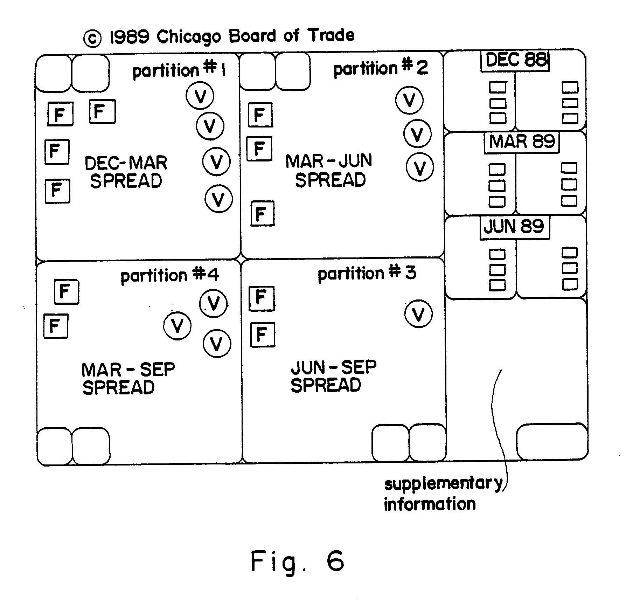

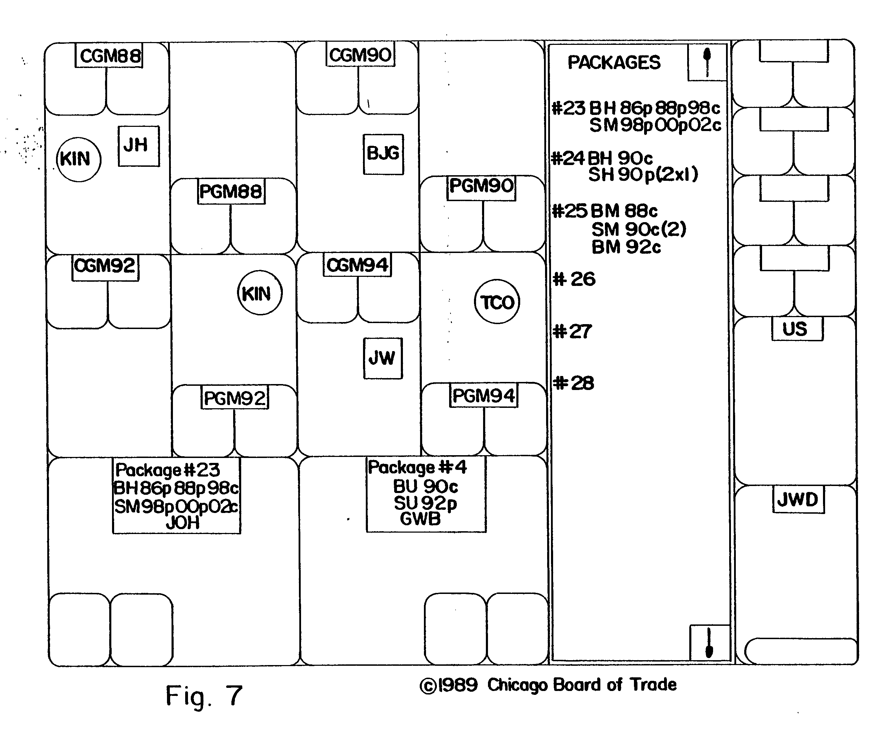

Figures 6 and 7 illustrate possible organizations of the trading screen for spread trading and option trading, respectively. It will be appreciated that the quantity of information needed to be presented on the spread trading screen limits the number of partitions of the trading arena of the user terminal display that can be made. That limit is desirable in order to maintain a useful size for the spread partitions. Four spread partitions are shown in Figure 6, each of which includes a suitable price display and participating trader icons. It will be understood that a user can mix spread partitions with outright partitions on his display.

Referring to Figure 7, the trading arena partition of the user terminal display for options trading would advantageously include more than one type of option transaction. Combinations of different options, strikes, and expirations are typically referred to as packages. Packages such as # 23 and # 4 are illustrated in the figure.

Referring again to Figure 2b, the following will illustrate the operation of the system. Figure 2b represents a possible trading screen for a hypothetical Member TCO. The keys referred to below are illustrated in Figure 1c; it will be understood that the keyboard may be a device that is dedicated to the trading system or employs suitably identified keys provided on a conventional computer keyboard.

(i) To hit a bid or take an offer in MAR89 bonds (abbreviated "USH")

- mouse: enter amount (if less than what icon is showing), point and click on icon with mouse in the appropriate partition.

- keyboard: enter amount (if less than what icon is showing), type member acronym, press BUY (or SELL) action key.

e.g., to buy 50 MAR89 contracts from member TNT

TNT + (press BUY key).

e.g., to buy 40 MAR89 contracts from member TNT

40 + TNT + (press BUY key).

(ii) To hit a bid or take an offer in JUN89 bonds

≫ To hit a bid or take an offer in JUN89 bonds Member TCO must have the JUN89 market enter the trading arena. By clicking on the JUN89 price display or pressing the P2 key and the ENTER key, member TCO can have the JUN89 market enter the trading arena. The MAR89 market moves into the P2 display. Once the JUN89 market has entered the trading arena, member TCO can follow the same steps as in (i) above to hit a bid or take an offer.

In summary:

- mouse: click on the JUN89 price display to have the JUN89 market enter the trading arena. Enter amount (if less than what icon is showing), point and click on icon with mouse in the appropriate partition.

- keyboard: press the P2 key and the ENTER key to have the JUN89 market enter the trading arena. Enter amount (if less than what icon is showing), type member acronym, press BUY (or SELL) action key.

e.g., to buy 50 JUN89 contracts from member KIN (press P2 key) + (press ENTER key) + 50 + KIN + (press BUY key.)

(iii) To enter a bid or an offer in MAR89 bonds

- mouse: enter amount (press "@" key and enter price if bidding at a price different than the current market price), point and click on bid/offer box for MAR89 bonds with mouse.

- keyboard: enter amount (press "@" key and enter price if bidding at a price different than the current market price), press BID (or OFFER) action key.

e.g., to bid for 50 MAR89 contracts at price 09 (current market bid price is 09)

50 + (press BID key).

e.g., to bid for 50 MAR89 contracts at price 10 (current market bid price is 09)

50 + (press @ key) + 10 + (press BID key). (iv) To enter a bid or an offer in JUN89 bonds

≫ Assume that the MAR89 market is in the trading arena.

- mouse: enter amount (press "@" key and enter price if bidding at a price different from the current market price), point and click bid/offer box for JUN89 bonds with mouse.

- keyboard: press the P2 key, enter amount,(press "@" key and enter price if bidding or offering at a price different from the current market price), press BID (or OFFER) key.

e.g., to bid for 50 JUN89 contracts at price 09 (current market bid price is 09)

(press P2 key) + 50 + (press BID key).

e.g., to bid for 50 JUN89 contracts at price 10 (current market bid price is 09)

(press P2 key) + 50 + (press @ key) + 10 + (press BID key).

(v) To use group feature

- mouse: point and click on icons in the trading arena with mouse while holding down "shift" key.

- keyboard: type member acronym, press "+" key, type next member acronym, press "+" key, etc. End with "BUY" key or "SELL" key.

e.g., to group member KIN and member BJG KIN + (press "+" key) + BJG + (press "BUY" key or "SELL" key).

(vi) To cancel a bid in MAR89 bonds

Assume that the MAR89 market is in the trading arena.

- mouse: point and click on your bid icon for MAR89 bonds with mouse.

- keyboard: press CANCEL-BID key.

(vii) To cancel a bid in JUN89 bonds

Assume that the MAR89 market is in the trading arena.

- mouse: point and click on your bid icon for JUN89 bonds with mouse.

- keyboard: press P2 key, and then press CANCEL-BID key.

e.g., to cancel your bid for 10 JUN89 contracts at price 09

(press P2 key) + (press CANCEL-BID key).

(viii) To cancel all bids in all bond markets

- mouse: point and click on bid/offer icon in any market while holding down the OPTION key.

- keyboard: press the CANCEL-BOTH key while holding down the OPTION key.

e.g., to cancel your bid for 10 JUN89 contracts at price 08 and your offer for 10 SEP89 contracts at price 26.

(hold down OPTION key) + (press CANCEL-BOTH key).

It will be understood that the foregoing description is illustrative only and that one of ordinary skill in the art will recognize various modifications which do not depart from the spirit and scope of the invention that are to be limited solely by the following claims.

## Claims

selected by the first user.

1. An apparatus for market trading comprising:
a host processor; and
a plurality of user terminals connected to the host processor, each user terminal comprising:
display means for displaying a representation of a market at which a commodity is being traded; and
entry means for permitting a user to enter a trading order,
the apparatus further including communication means for transferring data between the user terminals and the host processing means such that information relating to each trading order entered and to the user entering that order can be displayed on the display means of the other user terminals.

2. An apparatus as claimed in claim 1, wherein the communication means enables periodic bursts of refresh and update data and two-way communications between user terminals and the host processing means between bursts.

3. An apparatus as claimed in claim 1 or 2, wherein the user terminals include terminal processor means that permit traders to select which of a plurality of market representations is to be displayed on said user display means and to enter orders in the market selected.

4. An apparatus as claimed in one of claims 1 to 3, wherein the host processing means includes means for selecting an access time between the host and the various user terminals.

5. An apparatus as claimed in any preceding claim, wherein only information relating to orders at the market prices are displayed on the terminal display means.

6. An apparatus as claimed in one of claims 1 to 4, wherein said terminal display means comprises means for displaying information relating to users not bidding or offering at the market price.

7. An apparatus ae claimed in any preceding claim, wherein orders are executed by the host processor in accordance with time-of-receipt and price priority.

8. An apparatus as claimed in any preceding claim, wherein users entering orders to buy and to sell the commodity are represented on the display means by distinguishable icons.

9. An apparatus as claimed in any one of claims 1 to 8, wherein the host processing means simultaneously executes transactions between a first user and one or a plurality of second users selected by the host processing means according to the details of orders entered by the first and second users.

10. An apparatus as claimed in any one of claims 1 to 8, wherein the host processing means simultaneously executes transactions between a first user and one or a plurality of second users

Fig. 1a

MX "terminal"                                              200

250                                                        230

| USER I/F |          240          | TRANSACTION PROCESSOR |

fifo

fifo 270                           fifo 220

| SENDER | 260                    | RECEIVER | 210

300

MX "host"                                                  100

| RECEIVER | 110                  | SENDER | 150

HOST-IN Q

Q-MONITOR 120    130 fifo    | TRANSACTION PROCESSOR | 140

Fig. 1b

© 1989 Chicago Board of Trade

| 09 | | 13 | | | | | | 01 | | 03 |
| (125) | | (100) | | | | | | (200) | | (250) |

trading arena

price displays for markets outside the pit

| 22 | (10) |
| 12 | (20) | | 13 | (10) |

| 02 | | 04 | 09 | | 11 | 11 | | 15 | 23 | | 28 |
| (10) | P1 | (50) | (950) | P2 | (750) | (10) | P3 | (50) | (100) | P4 | (150) |

price displays

| 09 | | 13 | | 28 | | | | | |
| (100) | P5 | (200) | (0) | P6 | (10) | (0) | P7 | (0) | (0) | P8 | (0) |

supplementary information

MOUSE ~203

~201

~202

EP 0 388 162 A2

Fig. Ic

© 1989 Chicago Board of Trade

Fig. 2c

© 1989 Chicago Board of Trade

Fig. 2a

EP 0 388 162 A2

205-4  205-3  205-2

| 09 | USH | 11 |
| (925) | | (750) |

CZ 100

GA 100

V 25

DAS 50

| 01 | MBH | 03 |
| (200) | | (250) |

205-1

PA 25

BAL 250

BJG 500

TNT 50

| 22 | TNH | 25 |
| (100) | | (50) |

206

205-5

KIN 200

TCO 50

| 12 | FFH | 15 |
| (20) | | (10) |

JZ 150

TBP 50

KM 25

JOH 100

| 02 | USM-USU | 04 | 09 | USM | 13 | 11 | USU | 15 | 23 | USZ | 28 |
| (10) | P1 | (50) | (125) | P2 | (100) | (10) | P3 | (50) | (100) | P4 | (150) |

Fig. 2b

TCO 25

205-6

supplementary information

207

| 09 | USH-USM | 13 | | USM90 | 28 | | USU90 | | | USZ90 | |
| (100) | P5 | (200) | (0) | P6 | (10) | (0) | P7 | (0) | (0) | P8 | (0) |

TCO 50

© 1989 Chicago Board of Trade

BJG < KIN100 @ 11 USZ
TCO > BJG 25 @ 09 USZ
JOH > KIN100 @ 09 USZ
KMT > GB20 @ 09 USZ
JOH < JB10 @ 11 USZ

— 207-5

**NEWS**

| DOW | REU | TEL | |

— 207-3

11-02-88 1647 EST
Treasury to Announce $9 bn 30-yr
Bonds
Washington-The Treasury said it will
delay a formal announcement of the
sale of $9 bn 30-year bonds until
President Reagan signs a bill author

— 207-4

| KIN | |

+100 @ 09 BJG USZ
−25 @ 11 TCO USZ
−75 @ 11 JOH USZ

207-1 —

| TEL | — 207-2

Fig. 3

| OI (200) | MBH | O3 (250) |
| 22 (IOO) | TNH | 25 (50) |
| I2 (20) | FFH | I5 (IO) |

supplementary information

DAS 50   TNT 50   BJG 500   JOH IOO   50

GA IOO   KM 25   KIN 200   BAL 250   JZ I50   CZ IOO   V 25   TBP 50

O9 | USH | II
(925) (750)

| 23 (IOO) | USZ | 28 P4 (I50) |
| | USZ90 | P8 (O) |
| II (IO) | USU | I5 P3 (50) |
| (O) | USU90 | P7 (O) |
| O9 (I25) | USM | I3 P2 (IOO) | TOO 25 |
| (O) | USM90 28 | P6 (IO) |
| O2 (IO) | USM-USU | O4 PI (50) |
| O9 (IOO) | USH-USM | I3 P5 (200) | TOO 50 |

Fig. 4

© 1989 Chicago Board of Trade

BJG   HOP   XXX

BBY   KIN   ZED
      IO

BLU   KMT   ZIG

DAB   KZU   ZIP

DAK   LIM   ZYZ

EBK   MAZ
 5

EPP   OPP

ERD   TCO

FAY   THU

GA    TKK

GB    TNT

HAL   UFO

HAT   VAP

⬜ bidding in the pit

▨ offering in the pit

▨ in the pit

⬜ has left the pit

EP 0 388 162 A2

Fig. 5a

BJG    HOP    XXX          ░░░ bidding in the pit

BBY    KIN    ZED          ▧ offering in the pit
       IO

BLU    KMT         KIN   John R. Kinsella

DAB    KZU
                   logon : 08:00
DAK    LIM
                   logoff:
EBK    MAZ
 5                 activity:

EPP    OPP
                   message: _____
ERD    TCO         _____
                   _____
FAY    THU         _____
                   _____
GA     TKK         _____

GB     TNT                                    more

HAL    UFO

HAT    VAP

Fig. 5b

EP 0 388 162 A2

BJG    HOP    XXX                          [ ] bidding in the pit

BBY    KIN    ZED                          [/] offering in the pit
       IO

BLU    KMT         KIN   John R. Kinsella

DAB    KZU         logon : 08:00

DAK    LIM         logoff:

EBK    MAZ         activity:
 5

EPP    OPP         message:_____
                   _____     KIN   John R. Kinsella
ERD    TCO         _____           President/Chief Executive Officer
                   _____           Jernigan-Kinsella & Co.
FAY    THU         _____           141 W. Jackson - Rm.1679
                   _____           Chicago, IL. 60604
GA     TKK                           (312) 341-7550

GB     TNT                           Board of Directors-Director(Term Expiring 1989);
                                     Executive Committee on Competitive Stance;F.I.
HAL    UFO                           Executive,Chairman; Special Committee on
                                     Expanded Trading Hours,Co-Chairman;
HAT    VAR                           AdHoc Committee to Review the Commodity
                                     Exchange Act; and AdHoc Committee to
                                     Review Financial Standards

Fig. 5c

EP 0 388 162 A2

© 1989 Chicago Board of Trade

partition #1

F    F

F

F    DEC-MAR
    SPREAD

V
V
V
V

partition #2

F

F    MAR-JUN
    SPREAD

F

V
V
V

DEC 88

MAR 89

JUN 89

partition #4

F

F

MAR-SEP
SPREAD

V
V
V

partition #3

F

F

JUN-SEP
SPREAD

V

supplementary
information

Fig. 6

Fig. 7

©1989 Chicago Board of Trade

EP 0 388 162 A2

Fig. 8